# EUROPEAN PATENT APPLICATION

(11) **EP 4 775 854 A1**
(43) Date of publication of application: **15.07.2026**
(21) Application number: 24862545.1
(22) Date of filing: 15.08.2024
(51) Int. Cl.: F16J 15/20, C08K 3/04, C08K 3/013, C08K 3/22, C08K 3/34, C08L 21/00, C09K 3/10

(54) **SEALING DEVICE AND RUBBER COMPOSITION**

(30) Priority: 08.09.2023 JP 2023145937
(71) Applicant: NOK Corporation, Minato-ku Tokyo 105-8585 (JP)
(72) Inventor: ANZAI Takahiro, Fujisawa-shi, Kanagawa 2510042 (JP); TSUTSUI Takahiro, Makinohara-shi, Shizuoka, 4210532 (JP); INOUE Ibuki, Fujisawa-shi, Kanagawa 2510042 (JP); KAWASAKI Hiromu, Fujisawa-shi, Kanagawa 2510042 (JP); AOYAGI Yuichi, Fujisawa-shi, Kanagawa 2510042 (JP)
(74) Representative: Global IP Europe Patentanwaltskanzlei
(86) International application number: PCT/JP2024/029115
(87) International publication number: WO 2025/052891

(57) **Abstract**

Provided is a novel sealing device that can inhibit friction even with boundary lubrication or mixed lubrication.

A sealing device (1), including a seal member (6), wherein the seal member (6) contains a rubber composition, and the rubber composition contains a compound having a functional group at an end and having an aliphatic hydrocarbon group having 4 or more carbon atoms.

## Description

### Technical Field

The present invention relates to a sealing device and a rubber composition.

### Background Art

In the fields of vehicles, general-purpose machines, industrial machines, etc., various sealing devices are used for sealing a gap between a rotary member and a stationary member, a gap between a reciprocating member and a stationary member, etc. A typical sealing device has a seal member composed of a rubber composition, and this seal member slides on a surface of a facing member.

To inhibit friction of the sliding part in the seal member, sliding with fluid lubrication is desirable. Thus, techniques for achieving the fluid lubrication have been adopted by means of, for example, increase in an operation speed of the device, use of a lubricating liquid with high viscosity, etc. Meanwhile, the used lubricating liquid tends to have low viscosity in recent years due to the demand for energy saving. Therefore, there is a need for investigating a method for inhibiting friction with boundary lubrication or mixed lubrication, which causes difficulty in formation of an oil film on the sliding part.

Known as a method for inhibiting the friction with the boundary lubrication is improvement of lubricity by a coating on a surface of the seal member or design of the surface geometry. Instead of use of a lubricating oil, known is a self-lubricating rubber composition in which a solid lubricant or a 260041 specific compound is compounded into rubber for generating bloom or bleeding on a surface of the rubber to inhibit friction (for example, Patent Literature 1 to 4). Meanwhile, in the sealing device that presupposes the presence of a lubricating oil, there still has been a demand for a seal member that can be manufactured via no complex step, that has a high degree of freedom on the surface geometry, that has a high degree of freedom on the used rubber component, and that easily controls the friction.

### Document List

### Patent Literatures

Patent Literature 1: Japanese Patent Application Publication No. H6-166774
Patent Literature 2: Japanese Patent Application Publication No. H8-012733
Patent Literature 3: Japanese Patent Application Publication No. 2008-285562
Patent Literature 4: Japanese Patent Application Publication No. 2011-046812

### Summary of Invention

### Technical Problem

The present invention provides a novel sealing device that can inhibit friction even with boundary lubrication or mixed lubrication.

### Solution to Problem

Essential configurations of the present invention are as follows, for example.
[1] A sealing device, comprising a seal member, wherein
   the seal member contains a rubber composition, and 260041 the rubber composition contains a compound having a functional group at an end and having an aliphatic hydrocarbon group having 4 or more carbon atoms.
[2] The sealing device according to [1], wherein the rubber composition contains an inorganic filler.
[3] The sealing device according to [2], wherein the inorganic filler is at least one or more selected from the group consisting of carbon black, a metal oxide, a metal hydroxide, and a silicate mineral.
[4] The sealing device according to [2] or [3], wherein the compound modifies a surface of the inorganic filler.
[5] The sealing device according to any one of [1] to [3], wherein the functional group is a phosphoric acid group, a hydroxy group, a carboxy group, a carboxylate ester group, an amide group, or an amino group.
[6] A rubber composition, comprising a compound having a functional group at an end and having an aliphatic hydrocarbon group having 4 or more carbon atoms.
[7] A method for improving retainability of a lubricating oil on a sliding surface in a sealing device, wherein the rubber composition according to [6] is used for a seal member.
[8] A sealing device, comprising a seal member, wherein
   the seal member contains a rubber composition, and
   the rubber composition contains an ashless friction modifier.

### Effects of Invention

The present invention can provide a novel sealing device that can inhibit friction even with boundary lubrication or mixed lubrication.

### Brief Description of Drawings

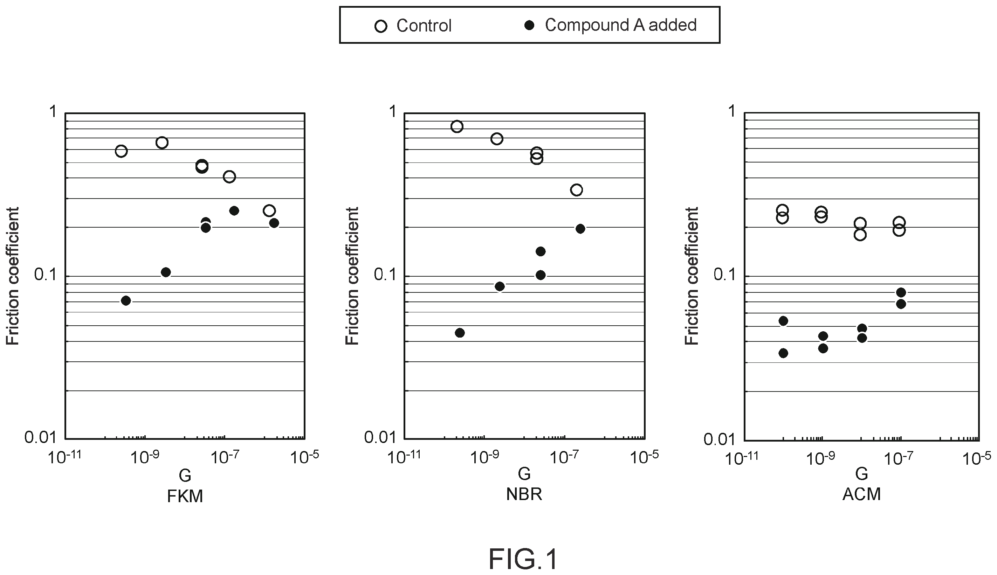

[Fig. 1] Plots showing results of reciprocating dynamic friction tests with fluororubber (FKM), acrylonitrile-butadiene rubber (NBR), and acrylic rubber (ACM). The horizontal axis represents G (viscosity·speed·contact width/tightening force), and the vertical axis represents a friction coefficient.

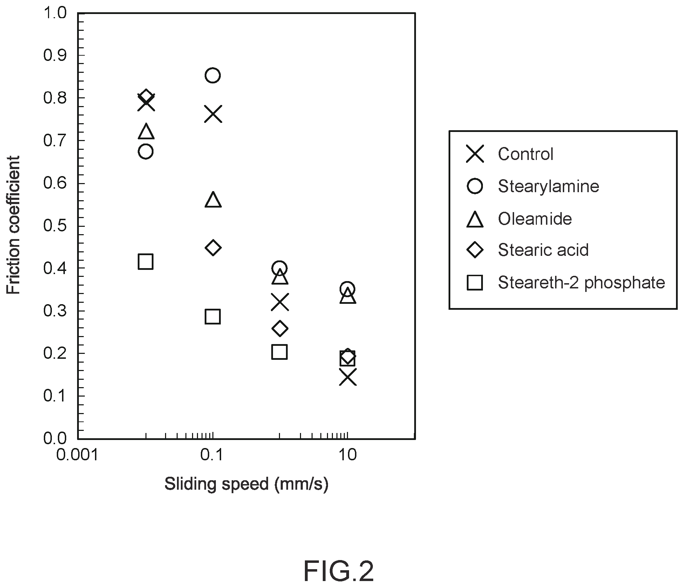

[Fig. 2] Plots showing results of reciprocating dynamic friction tests to evaluate an effect by a terminal functional group, which were performed by using a cold-rolled steel sheet (SPCC). The horizontal axis represents a sliding speed (mm/s), and the vertical axis represents a friction coefficient.

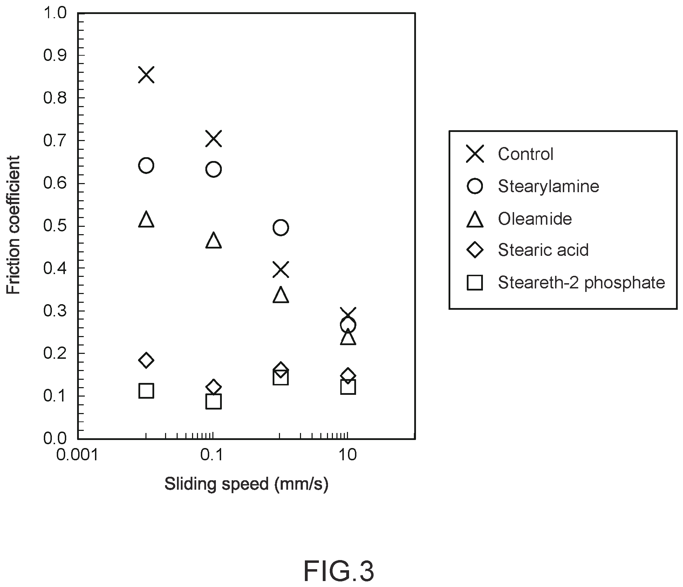

[Fig. 3] Plots showing results of reciprocating dynamic friction tests to evaluate an effect by a terminal functional group, which were performed by using a rubber composition molded product. The horizontal axis represents a sliding speed (mm/s), and the vertical axis represents a friction coefficient.

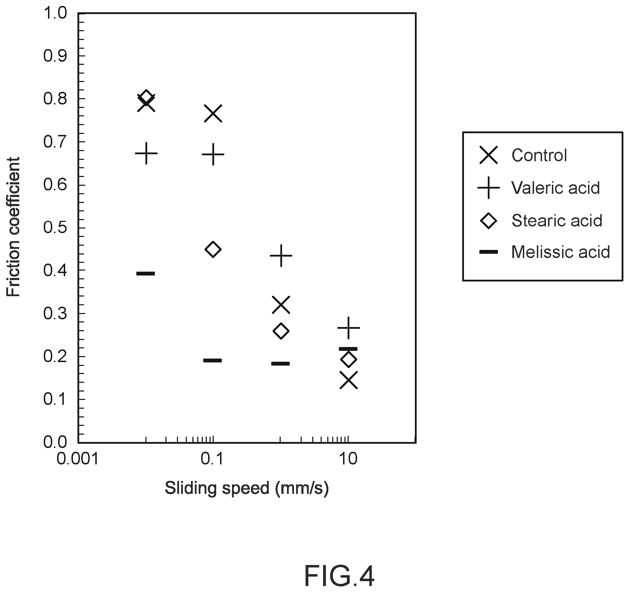

[Fig. 4] Plots showing results of reciprocating dynamic friction tests to evaluate an effect by a chain length of an aliphatic hydrocarbon group, which were performed by using a cold-rolled steel sheet (SPCC). The horizontal axis represents a sliding speed (mm/s), and the vertical axis represents a friction coefficient.

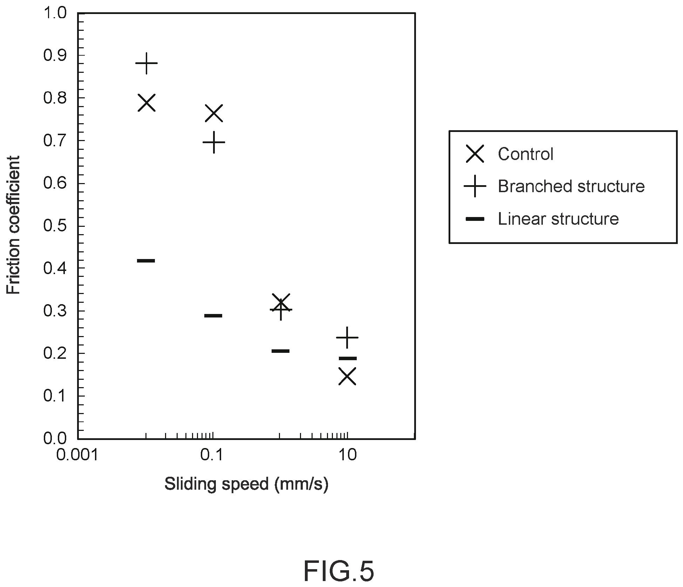

[Fig. 5] Plots showing results of reciprocating dynamic friction tests to evaluate an effect by structure (linear or branched chain) of an aliphatic hydrocarbon group, which were performed by using a cold-rolled steel sheet (SPCC). The horizontal axis represents a sliding speed (mm/s), and the vertical axis represents a friction coefficient.

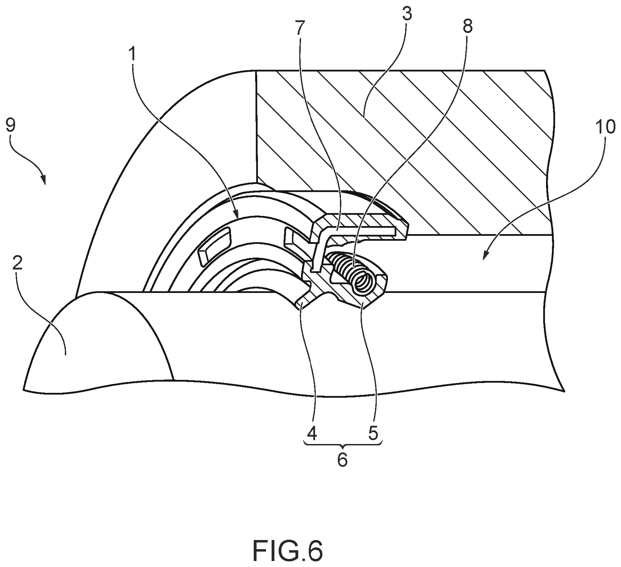

[Fig. 6] A sectional view of a sealing device of one example of the present invention.

### Description of Embodiments

### [Lubricating oil]

A sealing device of the present invention has a seal member. The seal member may be used together with a lubricating oil. In the present description, "lubricating oil" refers not to a component that blooms or bleeds from a rubber composition constituting the seal member but to a lubricating fluid prepared and used independently of the seal member. When a sealing target is an oil, this oil may act as the lubricating oil. In addition, "used together with the lubricating oil" typically refers to contact of at least a part of the seal member with the lubricating oil during use of the sealing device.

A type of the lubricating oil used together with the sealing device of the present invention is not particularly limited. The lubricating oil may be those in which a synthetic oil is used as a base oil, or may be those in which a mineral oil is used. Examples of the synthetic oil include a synthetic hydrocarbon oil, an ester oil, an ether oil, and a glycol oil. The synthetic oil and the mineral oil may be used singly, or may be mixed for use.

Examples of the synthetic hydrocarbon oil include poly-α-olefin, ethylene-α-olefin copolymer, polybutene (polyisobutylene), an alkylbenzene, and an alkylnaphthalene. Examples of the ester oil include a diester (an ester between a dicarboxylic acid and a mono-alcohol), a polyol ester, and an aromatic ester. Examples of the ether oil include an alkyl diphenyl ether. Examples of the glycol oil include a polyalkylene glycol. These may be used singly, or two or more thereof may be mixed for use.

The lubricating oil may contain another component in addition to the aforementioned base oil as necessary. Examples of the other component include, but not limited to, a thickener, an extreme-pressure agent, an antioxidant, an 260041 antirust agent, an oily agent, and a viscosity-index improver. The lubricating oil may be those in which only the base oil is used.

### [Rubber composition]

In the sealing device of the present invention, the seal member contains a rubber composition containing a compound (hereinafter, also referred to as "compound A" for convenience) having a functional group at an end and having an aliphatic hydrocarbon group having 4 or more carbon atoms. Hereinafter, the rubber composition will be described in detail.

### (Rubber component)

The rubber composition contains a rubber component. A type of the rubber component is not particularly limited. Examples of the rubber component include natural rubber, styrene-butadiene rubber, butadiene rubber, chloroprene rubber, acrylonitrile-butadiene rubber (nitrile rubber, NBR), hydrogenated nitrile rubber, isoprene rubber, butyl rubber, ethylene-propylene rubber, ethylene-propylene-diene rubber (EPDM), acrylic rubber (ACM), fluororubber (FKM), and silicone rubber. Among these, a rubber component selected from the group consisting of fluororubber (FKM), acrylonitrile-butadiene rubber (nitrile rubber, NBR), silicone rubber, and acrylic rubber (ACM) is preferable.

### (Compound A)

As the compound A, compounds known as an ashless friction modifier may be typically used. The compound A has a functional group at an end. A type of the functional group is not particularly limited, but preferably a functional group that can modify a surface of an inorganic filler, described later. The mode of the surface modification may be any of physical adsorption or chemical adsorption, but is preferably chemical adsorption, namely adsorption by a chemical bond formed with a chemical reaction between the surface of the inorganic filler and the functional group. The compound A having the functional 260041 group at an end allows the functional group to function as an anchor, and elution of the compound A into the lubricating oil can be inhibited, and thus the friction-inhibiting effect can be easily maintained for a long term.

Examples of the functional group include a phosphoric acid group (H₂PO₄-), a hydroxy group (-OH), a carboxy group or a carboxylate ester group (-COOR¹), a carboxylic halide group (-COX), an amide group (-CONR²R³), or an amino group (-NR⁴R⁵). The groups represented by R¹ to R⁵ are not particularly limited. The groups represented by R¹ to R⁵ may be each independently a hydrogen atom, a hydrocarbon group having 1 to 12 carbon atoms, or a hydrocarbon group having 1 to 12 carbon atoms substituted with one or two or more hydroxy groups, for example. X represents a halogen atom. X is preferably, for example, a fluorine atom, a chlorine atom, a bromine atom, or an iodine atom, and more preferably a chlorine atom. The compound A may have two or more of the functional group, but preferably has only one of the functional group.

The hydrocarbon group having 1 to 12 carbon atoms is not particularly limited as long as it is a hydrocarbon group having 1 to 12 carbon atoms and composed of carbon atom(s) and hydrogen atoms, and examples thereof include a chain hydrocarbon group, an aromatic hydrocarbon group, and an alicyclic hydrocarbon group. The chain hydrocarbon group is not particularly limited as long as the total number of carbon atoms is 1 to 12, and may be a linear hydrocarbon group or a branched hydrocarbon group. The aromatic hydrocarbon group is not particularly limited as long as the total number of carbon atoms is 6 to 12, and may be an aromatic hydrocarbon group having a substituent or an aromatic hydrocarbon group having no substituent. The aromatic hydrocarbon group may have a condensed polycyclic structure. The alicyclic hydrocarbon group is not particularly limited as long as the total number of carbon atoms is 3 to 12, and may be an alicyclic hydrocarbon group having a 260041 substituent or an alicyclic hydrocarbon group having no substituent. The alicyclic hydrocarbon group may have a bridged cyclic structure.

Examples of the chain hydrocarbon group include: alkyl groups such as a methyl group, an ethyl group, a n-propyl group, an isopropyl group, a n-butyl group, an isobutyl group, a s-butyl group, a t-butyl group, a pentyl group, a hexyl group, a heptyl group, an octyl group, a nonyl group, a decyl group, an undecyl group, and a dodecyl group; alkenyl groups such as an ethenyl group, a propenyl group, a butenyl group, a pentenyl group, a hexenyl group, a heptenyl group, an octenyl group, a nonenyl group, a decenyl group, an undecenyl group, and a dodecenyl group; and alkynyl groups such as an ethynyl group, a propynyl group, a butynyl group, a pentynyl group, a hexynyl group, a heptynyl group, an octynyl group, a nonynyl group, a decynyl group, an undecynyl group, and a dodecynyl group.

Examples of the aromatic hydrocarbon group include a phenyl group, a benzyl group, a tolyl group, and a naphthyl group. The tolyl group may be any of an o-tolyl group, a m-tolyl group, and a p-tolyl group.

Examples of the alicyclic hydrocarbon group include a saturated or unsaturated cyclic hydrocarbon group. Examples of the cyclic hydrocarbon group include a cyclopropyl group, a cyclobutyl group, a cyclohexyl group, a cyclopentyl group, an adamantyl group, and a norbornyl group.

Examples of the hydrocarbon group having 1 to 12 carbon atoms substituted with one or two or more hydroxy groups include hydroxyalkyl groups such as a hydroxymethyl group, a 1-hydroxyethyl group, a 2-hydroxyethyl group, a 1-hydroxypropyl group, a 2-hydroxypropyl group, a 3-hydroxypropyl group, and a 2,3-dihydroxypropyl group (a glycerol group).

R¹ is preferably a hydrogen atom, an alkyl group, or a hydroxyalkyl group, more preferably a hydrogen atom, a methyl group, an ethyl group, a n-260041 propyl group, an isopropyl group, a hydroxymethyl group, a 1-hydroxyethyl group, a 2-hydroxyethyl group, a 1-hydroxypropyl group, a 2-hydroxypropyl group, a 3-hydroxypropyl group, or a 2,3-dihydroxypropyl group (a glycerol group), and further preferably a hydrogen atom or a 2,3-dihydroxypropyl group (a glycerol group).

R² to R⁵ are preferably a hydrogen atom, an alkyl group, or a hydroxyalkyl group, more preferably a hydrogen atom, a methyl group, an ethyl group, a n-propyl group, an isopropyl group, a hydroxymethyl group, a 1-hydroxyethyl group, a 2-hydroxyethyl group, a 1-hydroxypropyl group, a 2-hydroxypropyl group, or a 3-hydroxypropyl group, further preferably a hydrogen atom, a methyl group, or a 2-hydroxyethyl group, and most preferably a hydrogen atom.

From the viewpoint of easily obtaining the friction-reducing effect, the functional group is preferably a phosphoric acid group (H₂PO₄-), a carboxy group or a carboxylate ester group (-COOR¹), an amide group (-CONR²R³), or an amino group (-NR⁴R⁵), more preferably a phosphoric acid group (H₂PO₄-) or a carboxy group, and most preferably a phosphoric acid group (H₂PO₄-). Note that the phosphoric acid group, the carboxy group, and the amino group may be a form of a salt.

The compound A has an aliphatic hydrocarbon group having 4 or more carbon atoms in addition to the functional group. The compound A may have one, two, three, or four or more aliphatic hydrocarbon groups having 4 or more carbon atoms. The compound A preferably has only one aliphatic hydrocarbon group having 4 or more carbon atoms. The compound A having the aliphatic hydrocarbon group having 4 or more carbon atoms improves affinity with the lubricating oil to easily retain the lubricating oil on the sliding surface even in the boundary lubrication state, which can effectively inhibit the 260041 friction. That is, using the rubber composition containing the compound A for the seal member improves retainability of the lubricating oil on the sliding surface in the sealing device.

The aliphatic hydrocarbon group having 4 or more carbon atoms is not particularly limited as long as it is an aliphatic hydrocarbon group having 4 or more carbon atoms and composed of carbon atoms and hydrogen atoms, and examples thereof include a linear or branched chain aliphatic hydrocarbon group or an alicyclic hydrocarbon group. The alicyclic hydrocarbon group may have a bridged cyclic structure.

Examples of the chain aliphatic hydrocarbon group include: alkyl groups having 4 to 40 carbon atoms such as a n-butyl group, an isobutyl group, a s-butyl group, a t-butyl group, a pentyl group, a hexyl group, a heptyl group, an octyl group, a 2-ethylhexyl group, a nonyl group, a decyl group, an undecyl group, a dodecyl group, a tridecyl group, a tetradecyl group, a pentadecyl group, a hexadecyl group, a heptadecyl group, a 16-methylheptadecyl group (an isostearyl group), an octadecyl group, a nonadecyl group, an icosyl group, a heneicosyl group, a docosyl group, a tricosyl group, a tetracosyl group, a pentacosyl group, a hexacosyl group, a heptacosyl group, an octacosyl group, a nonacosyl group, a triacontyl group, a hentriacontyl group, a dotriacontyl group, a tritriacontyl group, a tetratriacontyl group, a pentatriacontyl group, a hexatriacontyl group, a heptatriacontyl group, an octatriacontyl group, a nonatriacontyl group, and a tetracontyl group; alkenyl groups in which one or two or more carbon-carbon single bonds in the above alkyl group having 4 to 40 carbon atoms are substituted with carbon-carbon double bonds; and alkynyl groups in which one or two or more carbon-carbon single bonds in the above alkyl group having 4 to 40 carbon atoms are substituted with carbon-carbon triple bonds. 260041

When the aliphatic hydrocarbon group having 4 or more carbon atoms is the alkenyl group, a number of the double bonds are preferably six or less, more preferably five or less, further preferably three or less, further preferably two or less, and most preferably one. In this case, the double bond is preferably positioned between from the third carbon-carbon bond to the ninth carbon-carbon bond counted from the end (the methyl group side).

Examples of the alicyclic hydrocarbon group include a saturated or unsaturated cyclic hydrocarbon group. Examples of the cyclic hydrocarbon group include a cyclobutyl group, a cyclohexyl group, a cyclopentyl group, an adamantyl group, and a norbornyl group.

From the viewpoint of easily obtaining the friction-reducing effect, the aliphatic hydrocarbon group having 4 or more carbon atoms is preferably a chain aliphatic hydrocarbon group, more preferably a linear aliphatic hydrocarbon group, further preferably a linear alkyl group or a linear alkenyl group, and most preferably a linear alkyl group.

From the viewpoints of the friction-reducing effect and ease of availability, a number of carbon atoms of the aliphatic hydrocarbon group having 4 or more carbon atoms is preferably 4 to 40, more preferably 8 to 35, further preferably 10 to 30, further preferably 12 to 25, and most preferably 15 to 20. In typical, a larger number of carbon atoms of the aliphatic hydrocarbon group yields more hydrophobicity, which improves affinity with the lubricating oil and easily yields the friction-reducing effect. In typical, a smaller number of carbon atoms of the aliphatic hydrocarbon group easily reduces a cost.

The functional group and the aliphatic hydrocarbon group having 4 or more carbon atoms may be directly bonded, or may be bonded via a group having two or more valency. The group having two or more valency may be groups represented by the following general formula, for example.

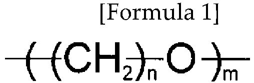

Here, "n" and "m" each independently represent an integer of 1 or more. "n" preferably represents an integer of 1 to 4, more preferably 2 or 3, and further preferably 2. "m" preferably represents an integer of 1 to 10, more preferably an integer of 1 to 5, and most preferably an integer of 1 to 4. The group represented by the above general formula is particularly preferably an ethylene oxide unit.

Specific examples of the compound A will be described.
· Example of a case where the terminal functional group is the phosphoric acid group:
   dodecyl phosphate (lauryl phosphate), tetradecyl phosphate (myristyl phosphate), hexadecyl phosphate (cetyl phosphate), octadecyl phosphate (stearyl phosphate), 9-octadecenyl phosphate (oleyl phosphate), laureth-2 phosphate, laureth-3 phosphate, laureth-4 phosphate, steareth-2 phosphate, steareth-3 phosphate, steareth-4 phosphate, oleth-2 phosphate, oleth-3 phosphate, oleth-4 phosphate, tris(2-ethylhexyl) phosphate, or an alkali metal salt, an alkali earth metal salt, or an amine salt thereof, etc. These may be a diester form, or may be a mixture of a monoester and a diester.
· Examples of a case where the terminal functional group is the hydroxy group:
   1-dodecanol (lauryl alcohol), 1-tetradecanol (myristyl alcohol), 1-hexadecanol (cetyl alcohol), 1-octadecanol (stearyl alcohol), 9-octadecen-1-ol (oleyl alcohol), etc.
· Example of a case where the terminal functional group is the carboxy group, the carboxylate ester group, or the carboxylic halide group:
   saturated fatty acids such as pentanoic acid (valeric acid), hexanoic acid (caproic acid), heptanoic acid (enanthic acid), octanoic acid (caprylic acid), nonanoic acid (pelargonic acid), decanoic acid (capric acid), undecanoic acid (undecylic acid), dodecanoic acid (lauric acid), tetradecanoic acid (myristic acid), hexadecanoic acid (palmitic acid), octadecanoic acid (stearic acid), icosanoic acid (arachidic acid), and triacontanoic acid (melissic acid); ω-3 fatty acids such as α-linolenic acid, eicosapentaenoic acid, and docosahexaenoic acid; ω-6 fatty acids such as linoleic acid and γ-linolenic acid; ω-9 fatty acids such as oleic acid; dimer acid (C36 dicarboxylic acid); a methyl ester or a 2,3-dihydroxypropyl ester thereof (for example, glycerin monooleate, etc.); an alkali metal salt, an alkali earth metal salt, or an amine salt thereof; or an acid halide (specifically an acid chloride) thereof; etc.
· Examples of a case where the terminal functional group is the amide group:
   dodecanamide (lauramide), hexadecanamide (palmitamide), octadecanamide (stearamide), 9-octadecenamide (oleamide), isostearyl polyamide, etc.
· Examples of a case where the terminal functional group is the amino group:
   dodecylamine (laurylamine), tetradecylamine (myristylamine), hexadecylamine (cetylamine), octadecylamine (stearylamine), 9-octadecenylamine (oleylamine), lauryldiethanolamine, myristyldiethanolamine, cetyldiethanolamine, stearyldiethanolamine, oleyldiethanolamine, etc.

A content of the compound A in the rubber composition is not particularly limited. The content of the compound A in the rubber composition is preferably 0.01 to 20 parts by mass, more preferably 0.1 to 15 parts by mass, and further preferably 1 to 10 parts by mass relative to 100 parts by mass of the rubber composition.

### (Inorganic filler) 260041

The rubber composition may contain an inorganic filler. The rubber composition containing the inorganic filler allows the compound A to be adsorbed onto the inorganic filler, and elution of the compound A into the lubricating oil can be inhibited, and thus the friction-inhibiting effect can be easily maintained for a long term.

A type of the inorganic filler is not particularly limited, and at least one or more selected from the group consisting of carbon black, a metal oxide, a metal hydroxide, and a silicate mineral may be used, for example. Examples of the metal oxide include iron(III) oxide (Fe₂O₃), chromium(III) oxide (Cr₂O₃), titanium dioxide (TiO₂), aluminum oxide (Al₂O₃), magnesium oxide (MgO), and zinc oxide (ZnO). Examples of the metal hydroxide include magnesium hydroxide and aluminum hydroxide. Examples of the silicate mineral include silica, wollastonite, talc, and mica.

Among the inorganic filler, the metal oxide, the metal hydroxide, or the silicate mineral is preferable, iron(III) oxide, chromium(III) oxide, titanium dioxide, aluminum hydroxide, silica, wollastonite, or talc is preferable, iron(III) oxide, chromium(III) oxide, titanium dioxide, aluminum hydroxide, or wollastonite is more preferable, and iron(III) oxide, chromium(III) oxide, titanium dioxide, or aluminum hydroxide is further preferable from the viewpoints of availability and adsorption ability with the compound A.

A content of the inorganic filler in the rubber composition is not particularly limited. The content of the inorganic filler in the rubber composition is preferably 10 to 300 parts by mass, more preferably 20 to 250 parts by mass, further preferably 30 to 200 parts by mass, and most preferably 50 to 150 parts by mass relative to 100 parts by mass of the rubber composition.

### (Other components) 260041

The rubber composition may contain various additives commonly used in the field of the rubber composition, such as an anti-aging agent, a plasticizer, a crosslinker, a crosslinking accelerator, an acid receiver, and a processing auxiliary as necessary in addition to the above components.

### (Methods for manufacturing rubber composition and seal member)

The rubber composition is obtained by kneading the above components by using a kneader, an open roll, or the like. The seal member is obtained by forming a ribbon-shaped or pellet-shaped preliminarily molded product from the obtained rubber composition with an extruder, etc. as necessary, and then appropriately molding, vulcanization, etc. When the inorganic filler is used, the compound A and the inorganic filler may be separately added into the rubber component, or a treatment in which the compound A is adsorbed on the surface of the inorganic filler may be performed in advance, and then the treated inorganic filler may be added into the rubber component.

### [Sealing device]

The sealing device of the present invention may be any sealing device for sealing a gap between a rotary member and a stationary member, a gap between a reciprocating member and a stationary member, etc. in vehicles, general-purpose machines, industrial machines, etc. Examples of such sealing devices include, but not limited to, an engine seal, a steering dust seal, a bonded piston seal, a transmission seal, a diff side seal, a universal joint seal, a shock absorber seal, a hub seal, and a valve stem seal.

Fig. 6 is a sectional view of a sealing device 1 (an oil seal) as one example of the present invention. The sealing device 1 is interposed between a shaft 2 and a housing 3, and is a substantially annular device as a whole. The sealing device 1 is fixed by fitting with a hole formed on the housing 3. The sealing device 1 has a seal member 6 including a dust lip 4 and a seal lip 5, a metal ring 7, and a spring 8. The seal member 6 is formed from the aforementioned rubber composition. The seal lip 5 slidingly contacts a surface of the shaft 2, and prevents leakage of a sealing target from a sealing target side 10 to the atmosphere side 9. The spring 8 energizes the seal lip 5 toward the shaft 2 to increase a pressing force of the seal lip 5. The dust lip 4 prevents ingress of dust from the atmosphere side 9.

Note that the sealing device 1 illustrated in Fig. 6 is merely one example of the sealing device of the present invention. As described above, the sealing device of the present invention may be any other sealing devices for sealing a gap between a rotary member and a stationary member, a gap between a reciprocating member and a stationary member, etc. in vehicles, general-purpose machines, industrial machines, etc.

The sealing device of the present invention can be manufactured via no complex step compared with art in which the surface of the seal member is subjected to coating. In addition, since the rubber composition itself has the friction-inhibiting action, the effect is easily retained even in a wearing state. In addition, since the sealing device of the present invention is not selective to the surface geometry of the seal member, the structure of conventional various sealing devices can be applied as it is. Further, the seal member of the sealing device of the present invention can inhibit friction even in the presence of a lubricant compared with art of using a self-lubricating rubber composition, inhibits elution of the component into the lubricant, and is not selective to the type of the rubber component. Since the friction-inhibiting action does not depend on a blooming or bleeding speed in the seal member of the sealing device of the present invention, the friction is easily controlled.

Embodiments of the present invention have been described above, but the present invention is not limited to the above embodiments. The present invention encompasses any aspects encompassed in the concept and the claims of the present invention, and may be variously modified within the range of the present invention.

### Examples

Hereinafter, the present invention will be further specifically described with Examples, etc., but the present invention is not limited by these Examples, etc. in any way.

### [Test condition]

### (Dynamic friction test using rubber composition molded product)

A rubber component, a compound A, and an inorganic filler were kneaded with a kneader and an open roll, and molded at 180°C for 6 minutes to obtain a hemispherical rubber specimen having a diameter of 5 mm. By using a reciprocating dynamic friction tester (manufactured in-house), a dynamic friction test was performed under the following condition.
Lubricating oil: Mineral oil
Load: 3 N
Temperature: 60°C
Speed: 0.01 to 10 mm/s (other than Test Example 2), 0.01 mm/s (Test Example 2)

### (Dynamic friction test using cold-rolled steel sheet (SPCC))

A surface of a cold-rolled steel sheet with 30 mm ×50 mm × 2 mm was subjected to a coating treatment with the compound A. By using a reciprocating dynamic friction tester (manufactured in-house), a dynamic friction test was performed under the following condition.
Lubricating oil: Mineral oil
Load: 3 N
Temperature: 60°C
Speed: 0.01 to 10 mm/s

### (Test Example 1 - Effect by rubber component)

As the rubber component, each of FKM (fluororubber, Tecnoflon(R) P757, manufactured by Solvay S.A.), NBR (acrylonitrile-butadiene rubber, N220S, manufactured by JSR Corporation), and ACM (acrylic rubber, commercially available) was used to manufacture a rubber composition molded product, and subjected to the dynamic friction test. As for FKM, the used specimen was obtained by using 5 parts by mass of a compound A1, described later, as the compound A and 75 parts by mass of iron(III) oxide as the inorganic filler relative to 100 parts by mass of FKM. As for NBR, the used specimen was obtained by using 9 parts by mass of the compound A1 as the compound A and 140 parts by mass of iron(III) oxide as the inorganic filler relative to 100 parts by mass of NBR. As for ACM, the used specimen was obtained by using a predetermined amount of the compound A and a predetermined amount of the inorganic filler relative to ACM. As for each of the rubber compositions, a specimen in which no compound A was added was respectively manufactured and used as a control. Fig. 1 shows plots of friction coefficients (dynamic friction coefficients) relative to G (viscosity·speed·contact width/tightening force). Note that a plurality of the plots relative to the identical G means that a plurality of times of the test were performed on the identical G.

As shown in Fig. 1, the compositions containing the compound A remarkably reduced the friction coefficient compared with the controls containing no compound A in cases of using any of FKM, NBR, and ACM as the rubber component. The effect of reducing the friction coefficient was remarkable 260041 specifically within a low-speed (low-G) region of boundary lubrication or mixed lubrication.

### (Test Example 2 - Effect by inorganic filler)

Dynamic friction tests were performed on rubber composition molded products obtained by using 5 parts by mass of each compound A and 75 parts by mass of each inorganic filler relative to 100 parts by mass of FKM (fluororubber, Tecnoflon(R) P757, manufactured by Solvay S.A.). As for each of the rubber compositions, a specimen in which no compound A was added was respectively manufactured and used as a control. The sliding speed was fixed to 0.01 mm/s. A case where the friction coefficient was less than 0.1 was evaluated as "a", a case where the friction coefficient was 0.1 or more and less than 0.5 was evaluated as "b", and a case where the friction coefficient was 0.5 or more was evaluated as "c".

As the compound A, ashless friction modifiers being the following compounds A1 to A5 were used.
Compound A1: Glycerin monooleate
Compound A2: Oleyldiethanolamine
Compound A3: Isostearyl polyamide
Compound A4: Mono/dioleylacid phosphate-amine salt (oleyl phosphate (a mono/di ester mixture))
Compound A5: Steareth-3 phosphate

As the inorganic filler, the following materials were used.
Iron(III) oxide: Brown #601, manufactured by Resino Color Industry Co., Ltd. Chromium(III) oxide: STV-T-3466, manufactured by Resino Color Industry Co., Ltd.
Titanium dioxide: TIPAQUE A100, manufactured by ISHIHARA SANGYO KAISHA, LTD.
Aluminum hydroxide: BF013, manufactured by Nippon Light Metal Company, Ltd.
Wollastonite A: Wollastonite 1250, manufactured by IMERYS S.A.
Wollastonite B: Wollastonite 400, manufactured by IMERYS S.A.
Wollastonite C: NYGLOS4W, manufactured by NYCO Minerals Inc.
Carbon black A: Acetylene black (DENKA BLACK, manufactured by Denka Company Limited)
Carbon black B: Carbon Black N330 (Sho Black N330, manufactured by Showa Cabot Co., Ltd.)
Carbon black C: Carbon Black N990 (Thermax, manufactured by Cancarb Limited)
Silica A: Nipsil E74P, manufactured by TOSOH SILICA CORPORATION
Silica B: REOLOSIL CP-102, manufactured by Tokuyama Corporation

Table 1 shows the results.

**[Table 1]**

| | Control | Compound A1 | Compound A2 | Compound A3 | Compound A4 | Compound A5 |
|---|---|---|---|---|---|---|
| Iron(III) oxide | c | a | a | a | a | a |
| Chromium(III) oxide | c | a | a | a | a | a |
| Titanium dioxide | c | a | a | a | a | a |
| Aluminum hydroxide | c | a | a | a | a | a |
| Wollastonite A | c | a | b | a | a | a |
| Wollastonite B | c | a | b | a | a | a |
| Wollastonite C | c | a | a | a | a | a |
| Carbon black A | c | b | b | b | b | b |
| Carbon black B | c | b | b | b | b | b |
| Carbon black C | c | b | a | b | a | a |
| Silica A | c | a | b | b | a | a |
| Silica B | c | a | b | b | a | a |

As shown in Table 1, the friction coefficient within the low-speed region (corresponding to boundary lubrication or mixed lubrication) was 260041 remarkably reduced by using the compound A in combination with a wide range of the inorganic filler.

### (Test Example 3 - Effect A by functional group)

A surface of a cold-rolled steel sheet (SPCC) was treated with stearylamine, oleamide, stearic acid, or steareth-2 phosphate as the compound A, and subjected to a dynamic friction test. In addition, a cold-rolled steel sheet (SPCC) not treated with the compound A was used as a control. Fig. 2 shows plots of friction coefficients (dynamic friction coefficients) relative to sliding speeds (mm/s).

As shown in Fig. 2, observed was the effect of reducing the friction coefficient within the low-speed region (at least one of 0.01 mm/s and 0.1 mm/s) in the cases of using the compounds A having various terminal functional groups. In addition, a particularly remarkable effect was observed when the terminal functional group was a phosphoric acid group.

### (Test Example 4 - Effect B by functional group)

Dynamic friction tests were performed on rubber composition molded products obtained by using 5 parts by mass of stearylamine, oleamide, stearic acid, or steareth-2 phosphate as the compound A, and 75 parts by mass of iron(III) oxide relative to 100 parts by mass of FKM (fluororubber, Tecnoflon(R) P757, manufactured by Solvay S.A.). A specimen in which no compound A was added was manufactured and used as a control. Fig. 3 shows plots of friction coefficients (dynamic friction coefficients) relative to sliding speeds (mm/s).

As shown in Fig. 3, the effect of reducing the friction coefficient within the low-speed region (at least one of 0.01 mm/s and 0.1 mm/s) was observed in the cases of using the compounds A having various terminal functional groups also in the test using the rubber composition molded products. As for a type of 260041 functional group having a particularly high effect, the tendency similar to Test Example 3, which used the cold-rolled steel sheet (SPCC), was observed.

From the results of Test Examples 3 and 4, it was found that the test using the cold-rolled steel sheet (SPCC) yielded results corelating with the test using the rubber composition molded product to some extent. Thus, various investigations were performed with the test using the cold-rolled steel sheet (SPCC) hereinafter.

### (Test Example 5 - Effect by number of carbon atoms)

A surface of a cold-rolled steel sheet (SPCC) was treated with valeric acid, stearic acid, or melissic acid as the compound A, and subjected to a dynamic friction test. In addition, a cold-rolled steel sheet (SPCC) not treated with the compound A was used as a control. Fig. 4 shows plots of friction coefficients (dynamic friction coefficients) relative to sliding speeds (mm/s).

As shown in Fig. 4, it was found that the effect of reducing the friction coefficient within the low-speed region (corresponding to boundary lubrication or mixed lubrication) became more remarkable when the compound A having an aliphatic hydrocarbon group having a large number of carbon atoms was used.

### (Test Example 6 - Effect by structure)

A surface of a cold-rolled steel sheet (SPCC) was treated with a compound A having a branched structure (tris(2-ethylhexyl) phosphate) or a compound A having a linear structure (steareth-2 phosphate), and subjected to a dynamic friction test. In addition, a cold-rolled steel sheet (SPCC) not treated with the compound A was used as a control. Fig. 5 shows plots of friction coefficients (dynamic friction coefficients) relative to sliding speeds (mm/s).

As shown in Fig. 5, it was found that the effect of reducing the friction coefficient within the low-speed region (corresponding to boundary lubrication 260041 or mixed lubrication) became more remarkable when the compound A having a linear structure was used.

### Industrial Applicability

The sealing device and the rubber composition of the present invention can be suitably used for sealing a gap between a rotary member and a stationary member, a gap between a reciprocating member and a stationary member, etc. in the fields of vehicles, general-purpose machines, industrial machines, etc.

### List of Reference Signs

- 1: sealing device,
- 2: shaft,
- 3: housing,
- 4: dust lip,
- 5: seal lip,
- 6: seal member,
- 7: metal ring,
- 8: spring,
- 9: atmosphere side,
- 10: sealing target side

## Claims

1. A sealing device, comprising a seal member, wherein
the seal member contains a rubber composition, and
the rubber composition contains a compound having a functional group at an end and having an aliphatic hydrocarbon group having 4 or more carbon atoms.

2. The sealing device according to claim 1, wherein the rubber composition contains an inorganic filler.

3. The sealing device according to claim 2, wherein the inorganic filler is at least one or more selected from the group consisting of carbon black, a metal oxide, a metal hydroxide, and a silicate mineral.

4. The sealing device according to claim 2 or 3, wherein the compound modifies a surface of the inorganic filler.

5. The sealing device according to any one of claims 1 to 3, wherein the functional group is a phosphoric acid group, a hydroxy group, a carboxy group, a carboxylate ester group, an amide group, or an amino group.

6. A rubber composition, comprising a compound having a functional group at an end and having an aliphatic hydrocarbon group having 4 or more carbon atoms.

7. A method for improving retainability of a lubricating oil on a sliding surface in a sealing device, wherein the rubber composition according to claim 6 is used for a seal member.

8. A sealing device, comprising a seal member, wherein
the seal member contains a rubber composition, and
the rubber composition contains an ashless friction modifier.
